# EUROPEAN PATENT SPECIFICATION

(11) **EP 4 344 927 B1**
(45) Date of publication and mention of the grant of the patent: **11.03.2026**
(21) Application number: 22831739.2
(22) Date of filing: 17.06.2022
(51) Int. Cl.: B60L 3/00, B60L 3/04, B60W 50/02

(54) **VEHICLE DRIVE CONTROL METHOD, APPARATUS AND SYSTEM, AND STORAGE MEDIUM AND VEHICLE**
VERFAHREN, VORRICHTUNG UND SYSTEM ZUR FAHRZEUGANTRIEBSSTEUERUNG SOWIE SPEICHERMEDIUM UND FAHRZEUG
PROCÉDÉ, APPAREIL ET SYSTÈME DE COMMANDE D'ENTRAÎNEMENT DE VÉHICULE, ET SUPPORT DE STOCKAGE ET VÉHICULE

(30) Priority: 30.06.2021 CN 202110742379
(43) Date of publication of application: 03.04.2024
(73) Proprietor: Great Wall Motor Company Limited, Baoding, Hebei 071000 (CN)
(72) Inventor: XU, Bin, Baoding, Hebei 071000 (CN)
(74) Representative: Klunker IP Patentanwälte PartG mbB
(86) International application number: PCT/CN2022/099518
(87) International publication number: WO 2023/273921

(56) References cited:
- WO-A1-2017/061981
- CN-A- 105 291 887
- CN-A- 105 291 887
- CN-A- 109 094 371
- CN-A- 109 094 371
- CN-A- 109 094 372
- CN-A- 109 094 372
- CN-A- 110 254 439
- CN-A- 110 254 439
- CN-A- 112 590 818
- CN-A- 112 590 818
- US-A1- 2019 050 307
- US-A1- 2020 036 315

## Description

### TECHNICAL FIELD

The present invention relates to the technical field of vehicle controlling, and particularly relates to a method, apparatus and system for controlling a vehicle electric drive system having a front-wheel drive system and a rear-wheel drive system, a computing and processing device, computer program, computer-readable storage medium and a vehicle.

### BACKGROUND

Currently, in the four-wheel-drive electric system of new-energy vehicles, both of the front-wheel drive and the rear-wheel drive employ a permanent-magnet synchronous motor system. The permanent-magnet synchronous motor uses a permanent magnet to generate an air-gap magnetic field, which is different from a brush motor using a field coil to generate an air-gap magnetic field, and is also different from an induction motor using the excitation component of a stator current to generate an air-gap magnetic field. Furthermore, the permanent-magnet synchronous motor has a simple structure, a low loss and a high efficiency.

In the related art, when the front-wheel drive system or the rear-wheel drive system has a fault, an electric-motor controller reports fault-level information according to a safety state of the electric motor, and a vehicle controller, according to the fault level, executes vehicle speed limiting or a parking action. When the front-wheel drive system or the rear-wheel drive system has a fault, the vehicle controller executes the action of deceleration or parking according to the fault level of the electric driving, but the capacity of driving of the drive system that does not have a fault cannot be sufficiently utilized.

CN 112 590 818 A relates to a vehicle fault handling method, device and vehicle. The vehicle fault handling method comprises: when the vehicle is driving in an automatic driving mode, obtaining fault information of the vehicle's drive system; classifying the fault information to obtain a fault level corresponding to the fault information; determining when takeover conditions are met based on the fault level corresponding to the fault information to obtain a takeover timing; and controlling the vehicle to switch from the automatic driving mode to a driver takeover mode according to the takeover timing.

CN 109 094 372 A relates to an electric vehicle fault rescue system and method. The method comprises: The system starts to work, and a main server monitors the actual situation of each electric vehicle connected to the network; An electric vehicle itself detects a fault, judges the type of the fault, and sends wirelessly a fault report to the main server; after the main server receives the fault report, it defines the level of the fault and takes corresponding treatment measures according to the fault level. By obtaining the situation of an electric vehicle fault in a timely manner, the system promptly and correctly reminds the driver, so that the driver can make the corresponding correct operation according to the prompt.

### SUMMARY

It is an object of the present invention to provide a method, apparatus and system for controlling a vehicle electric drive system having a front-wheel drive system and a rear-wheel drive system, a computing and processing device, computer program, computer-readable storage medium and a vehicle, so as to solve the above-described problem in the special situation.

The object is achieved by the features of the independent claims. Further embodiments are defined in the respective dependent claims.

As compared with the prior art, the method for controlling vehicle drive according to the present invention has the following advantages:

In the present invention, after the fault information of the electric drive system is detected, according to the safety-state information and the fault-behavior information of the electric drive system, the electric-drive-system fault level corresponding to the fault information is determined; after the fault information of the disengaging controller is detected, according to the acquired current gear position of the disengaging controller, the disengaging-system fault level corresponding to the fault information is determined; and according to the disengaging-system fault level and the electric-drive-system fault level, the corresponding fault processing action is executed. When any of the front-wheel drive system or the rear-wheel drive system has a fault, the faulty drive system may be disengaged according to the determination result of the fault information, to sufficiently utilize the capacity of driving of the fault-free drive system, not reduce the driving speed, and travel normally, thereby improving the vehicle driving behavior of four-wheel-drive-system vehicles, and thus improving the driving experience.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the technical solutions of the present invention or the related art, the figures will be briefly described below.
FIG. 1 is a flow chart of the steps of a method for controlling vehicle drive;
FIG. 2 is a schematic diagram of a system for controlling vehicle drive;
FIG. 3 is a schematic diagram of an apparatus for controlling vehicle drive;
FIG. 4 schematically shows a block diagram of a computing and processing device for implementing the method; and
FIG. 5 schematically shows a storage unit for maintaining or carrying a program code for implementing the method.

Reference numbers: 301 is the first determining module, 302 is the second determining module, and 303 is the executing module.

### DETAILED DESCRIPTION

In the related art, when the front-wheel drive system or the rear-wheel drive system has a fault, the electric-motor controller reports the fault-level information according to the safety state of the electric motor, and the vehicle controller executes vehicle speed limiting or a parking action according to the fault level. When the front-wheel drive system or the rear-wheel drive system has a fault, the vehicle controller executes the action of deceleration or parking according to the fault level of the electric driving, but the capacity of driving of the drive system that does not have a fault cannot be sufficiently utilized.

In order to overcome the above problems, the present application provides a method for controlling vehicle drive, wherein after the fault information of the electric drive system is detected, according to the safety-state information and the fault-behavior information of the electric drive system, the electric-drive-system fault level corresponding to the fault information is determined; after the fault information of the disengaging controller is detected, according to the acquired current gear position of the disengaging controller, the disengaging-system fault level corresponding to the fault information is determined; and according to the disengaging-system fault level and the electric-drive-system fault level, the corresponding fault processing action is executed. When any of the front-wheel drive system or the rear-wheel drive system has a fault, the faulty drive system may be disengaged according to the determination result of the fault information, to sufficiently utilize the capacity of driving of the fault-free drive system, not reduce the driving speed, and travel normally, thereby improving the vehicle driving behavior of four-wheel-drive-system vehicles, and thus improving the driving experience.

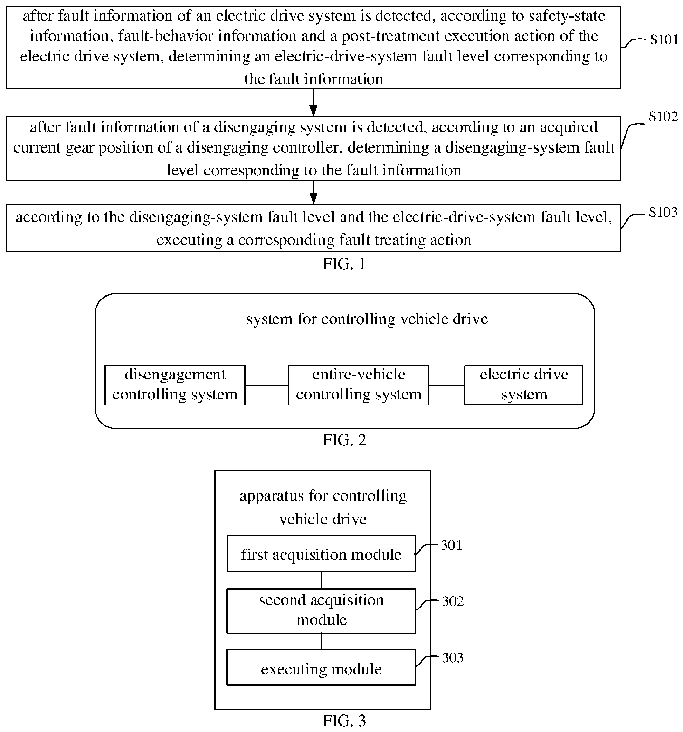

An embodiment of the present disclosure provides a method for controlling vehicle drive. Referring to FIG. 1, FIG. 1 shows a flow chart of the steps of a method for controlling vehicle drive according to an embodiment of the present application. The method includes the following steps:

Step S101: after fault information of an electric drive system is detected, according to safety-state information, fault-behavior information and a post-process execution action of the electric drive system, determining an electric-drive-system fault level corresponding to the fault information.

In the present embodiment, during the driving of a vehicle, the electric drive system might have a fault. The electric drive system includes a front-driving drive system and a rear-driving drive system, and each of the front-driving drive system and the rear-driving drive system includes the corresponding electric motor, electric-motor controller MCU and transmission mechanism. When the component has an electric fault or a mechanical fault, it feeds back the corresponding fault information to the electric drive system, and the electric drive system, according to the behavior of the fault information, the safety-state information of the electric drive system and the grading relation between the post-process actions required to be executed and the preset fault levels, determines the fault level of the electric fault or mechanical fault that happens in the system at this point.

In an alternative embodiment, the step of, according to the safety-state information and the fault-behavior information of the electric drive system, determining an electric-drive-system fault level corresponding to the fault information may include:

When the safety state of the electric drive system is that merely an active short-circuit state can be executed, the fault behavior is that the power of the electric drive system is lost, and the post-process execution action is that it is required to disconnect a high voltage, the electric-drive-system fault level is determined to be a fifth fault level.

**Table 1: table of correspondence of the electric-drive-system fault levels**

| electric-drive-system fault level | fault behavior | safety state | post-process action |
|---|---|---|---|
| 6 | The EDS power is lost | entering the safety state ONLY ASC | executing active discharging. |
| 5 | The EDS power is lost | entering the safety state ONLY ASC | The vehicle requires reducing the rotational speed of the electric motor to 0 within a prescribed duration. |
| 4 | The EDS power is lost | entering the safety state, wherein FW/ASC are switchable | The vehicle requires reducing the rotational speed of the electric motor to a rotational speed below a preset rotational speed within a prescribed duration. In this case the EDS enters the FW state, in which case the electric motor permits to be dragged below the rotational speed. |
| 3 | EDS STANDBY | entering the safety state, wherein FW/ASC are switchable | The vehicle requires reducing the rotational speed of the electric motor to a rotational speed below a preset rotational speed within a prescribed duration. In this case the EDS enters the FW state, in which case the electric motor permits to be dragged below the rotational speed. |
| 2 | incapable of outputting with the full power | The driving safety state is not affected | reduced-power operation |
| 1 | alarming | The driving safety state is not affected | reporting a fault code, and normally operating |
| 0 | no fault and no harm | The driving safety state is not affected | no process |

In the present embodiment, as in the table of correspondence of the electric-drive-system fault levels shown in Table 1, in the case in which the fault level is 6, the safety state of the electric drive system can merely be the execution of an active short-circuit state ASC (active short circuit). The safety state refers to the functional safety state of the driving process. When the safety state is that merely the active short-circuit state can be executed, and the corresponding fault behavior is that the power of the electric drive system is lost, the post-process action required to be executed is an action of disconnecting the high voltage and actively discharging. That case is a case of a high risk of the electric-drive-system fault level, and the electric-drive-system fault level is determined to be a fifth fault level. When the safety state of the electric drive system is that merely an active short-circuit state can be executed, the fault behavior is that the power of the electric drive system is lost, and the post-process execution action requires reducing the rotational speed of the electric motor to zero within a preset duration, the electric-drive-system fault level is determined to be a fourth fault level.

In the present embodiment, as in the table of correspondence of the electric-drive-system fault levels shown in Table 1, in the case in which the fault level is 5, when the safety state of the electric drive system is that merely an active short-circuit state can be executed, and the corresponding fault behavior is that the power of the electric drive system is lost, the post-process action required to be executed is an action of reducing the rotational speed of the electric motor to 0 within a prescribed duration by the vehicle. That case is a case of a common risk influence of the electric-drive-system fault level, and the electric-drive-system fault level is determined to be a fourth fault level.

When the safety state of the electric drive system is an active short-circuit state or a free-operation state, the fault behavior is that the power of the electric drive system is lost, and the post-process execution action is that it is required to reduce the rotational speed of the electric motor to a preset rotational speed within a preset duration, the electric-drive-system fault level is determined to be a third fault level.

In the present embodiment, as in the table of correspondence of the electric-drive-system fault levels shown in Table 1, in the case in which the fault level is 4, when the safety state of the electric drive system is execution of the active short-circuit state or the free-operation state FW (free wheeling), and the corresponding fault behavior is that the power of the electric drive system is lost, the post-process action required to be executed is an action of, by the vehicle, within a prescribed duration, reducing the rotational speed of the electric motor to a prescribed rotational speed or permitting being dragged with a rotational speed below the preset rotational speed. That case is a case of a common risk influence of the electric-drive-system fault level, and the electric-drive-system fault level is determined to be a third fault level.

When the safety state of the electric drive system is an active short-circuit state or a free-operation state, the fault behavior is that the electric drive system stands by, and the post-process execution action is that reducing the rotational speed of the electric motor to a preset rotational speed within a preset duration is required, the electric-drive-system fault level is determined to be a second fault level. In the present embodiment, as in the table of correspondence of the electric-drive-system fault levels shown in Table 1, in the case in which the fault level is 3, when the safety state of the electric drive system is execution of the active short-circuit state or the free-operation state FW (free wheeling), and the corresponding fault behavior is that the electric drive system stands by, the post-process action required to be executed is an action of, by the vehicle, within a prescribed duration, reducing the rotational speed of the electric motor to a rotational speed S or permitting being dragged with a rotational speed below the rotational speed S. That case is a case of a common risk influence of the electric-drive-system fault level, and the electric-drive-system fault level is determined to be a medium-risk fault level.

When the safety state of the electric drive system does not influence the driving safety state, the electric-drive-system fault level is determined to be a low-risk fault level.

In the present embodiment, as in the table of correspondence of the electric-drive-system fault levels shown in Table 1, in the cases in which the fault level is 0-2, which indicates that at this point the fault information does not affect the driving safety state, for example, an excessively high temperature of the vehicle body, or that no fault information is generated, and the corresponding alarming or reduced-power-operation action is executed. That case is a case of a low risk of the electric-drive-system fault level, and the electric-drive-system fault level is determined to be a low-risk fault level.

Step S102: after fault information of a disengaging system is detected, according to an acquired current gear position of a disengaging controller, determining a disengaging-system fault level corresponding to the fault information.

In the present embodiment, the disengaging controller ACU has two gears, i.e., an engaging gear and a decoupling gear. Because the decoupling structure is a mechanical structure itself, it has a low probability of fault. When a fault of the disengaging controller ACU is detected by the decoupling system, it acquires the current gear position of the disengaging controller, i.e., based on the information of the current gear position of the disengaging controller, determining the disengaging-system fault level corresponding to the fault information.

In an alternative embodiment, the step of, according to the acquired current gear position of the disengaging controller, determining the disengaging-system fault level corresponding to the fault information of the disengaging-system fault levels may include:

**Table 2: table of correspondence of the disengaging-system fault levels**

| decoupling system | gear position when a fault happens | controlling operation of the drive system |
|---|---|---|
| 5 | The gear position is in the half-engaging position or the position is unknown, and the power transmission is abnormal or uncontrolled | A fault code is reported, and the drive system cannot operate, which affects the driving of the vehicle, and it is required to park within a prescribed duration. |
| 4 | The gear position is in the disengaging position after the fault happens, and the power transmission is interrupted. | A fault code is reported, and the system enters the safety state and decouples the drive system, which does not affect the driving of the vehicle. |
| 3 | The gear position is in the engaging position after the fault happens, and the power transmission is not interrupted. | A fault code is reported, the safety state is entered, the drive system is engaged, and the drive system can operate, which does not affect the driving of the vehicle. |
| 2 | The power transmission is not interrupted | Part of the functions of ACU is limited, which does not affect the gear-shifting operation. |
| 1 | The power transmission is not interrupted | alarming. |
| 0 | no fault and no harm | no treatment |

When the current gear position of the disengaging controller is in the half-engaging position or is unknown, the current disengaging-system fault level is determined to be a fourth fault level of the disengaging-system fault levels.

In the present embodiment, as in the table of correspondence of the disengaging-system fault levels shown in Table 2, in the case in which the fault level is 5, i.e., when the disengaging controller has a fault, and its gear position is in the half-engaging position or its position is uncertain, because the information of the gear position cannot be collected, which indicates that the power transmission is abnormal or uncontrolled, at this point it is in a dangerous driving state. That case is a case of a high risk of the disengaging-system fault level, the current disengaging-system fault level is determined to be a fourth fault level of the disengaging-system fault levels.

When the disengaging-system fault level is the fourth fault level, a fault code is reported, and the drive system cannot operate, which affects the driving of the vehicle, and it is required to park within a prescribed duration.

When the current gear position of the disengaging controller is in the disengaging position, the current disengaging-system fault level is determined to be a third fault level of the disengaging-system fault levels.

In the present embodiment, as in the table of correspondence of the disengaging-system fault levels shown in Table 2, in the case in which the fault level is 4, i.e., when the disengaging controller has a fault, and its gear position is in the engaging position, which indicates that at this point the power transmission is interrupted, that case is a case of a common risk of the disengaging-system fault level, and the disengaging-system fault level is determined to be the third fault level.

When the disengaging-system fault level is the third fault level, a fault code is reported, and the system enters the safety state and decouples the drive system, which does not affect the driving of the vehicle.

When the current gear position of the disengaging controller is in an engaging position, the current disengaging-system fault level is determined to be a second fault level of the disengaging-system fault levels.

In the present embodiment, as in the table of correspondence of the disengaging-system fault levels shown in Table 2, in the case in which the fault level is 3, i.e., when the disengaging controller has a fault, and its gear position is in the engaging position, the power transmission is not interrupted. That case is a case of a common risk of the disengaging-system fault level, and the disengaging-system fault level is determined to be the second fault level.

When the disengaging-system fault level is the second fault level, a fault code is reported, the safety state is entered, the drive system is engaged, and the drive system can operate, which does not affect the driving of the vehicle.

When the fault information of the disengaging controller does not influence the driving safety state, the current disengaging-system fault level is determined to be a first fault level of the disengaging-system fault levels.

In the present embodiment, as in the table of correspondence of the disengaging-system fault levels shown in Table 2, in the cases in which the fault level is 0-2, i.e., when the fault of the disengaging controller is a fault that does not affect the driving safety state or no fault is generated, the normal gear-shifting operation can be performed, and therefore the power transmission is not interrupted. That case is a case of a low risk of the disengaging-system fault level, and the disengaging-system fault level is determined to be a low-risk fault level.

When the disengaging-system fault level is the low-risk fault level, the corresponding operation of controlling the drive system is executed, for example, not processing or alarming.

Step S103: according to the disengaging-system fault level and the electric-drive-system fault level, executing a corresponding fault processing action.

In the present embodiment, the vehicle controller VCU, after receiving the fault level of the electric drive system and the fault level of the disengaging controller ACU that are fed back, according to a mapping matrix between the fault levels of the electric drive system and the decoupling system, determines the corresponding fault processing action, and executes the corresponding treatment action by using the corresponding executing component.

In an alternative embodiment, the method further includes:
when the disengaging-system fault level is a first fault level, and the electric-drive-system fault level is a first fault level, executing a no-fault no-process action, an alarming action or a reduced-power-operation action;
when the disengaging-system fault level is the first fault level, and the electric-drive-system fault level is a second fault level, executing an action of disengaging operation of a faulty drive system;
when the disengaging-system fault level is a first fault level, and the electric-drive-system fault level is a third fault level, executing the action of disengaging the operation of the faulty drive system;
when the disengaging-system fault level is a first fault level, and the electric-drive-system fault level is a fourth fault level, executing the action of disengaging the operation of the faulty drive system; or
when the disengaging-system fault level is a first fault level, and the electric-drive-system fault level is a fifth fault level, executing the action of disengaging the fault drive system, disconnecting operation of a high-voltage system.

**Table 3: mapping table between the disengaging-system fault levels and the electric-drive-system fault levels**

| | disengaging-system fault level | | | | | |
|---|---|---|---|---|---|---|
| electric-drive-system fault level | | 0 | 1/2 | 3 | 4 | 5 |
| | 0 | no fault, no harm and no process | alarming | alarming | disengaging the faulty driving part | parking |
| | 1 | alarming | alarming | alarming | disengaging the faulty driving part | parking |
| | 2 | reducing the power | reducing the power | reducing the power | disengaging the faulty driving part | parking |
| | 3 | disengaging the faulty driving part | disengaging the faulty driving part | engaging the faulty driving part and running | disengaging the faulty driving part | parking |
| | 4 | disengaging the faulty driving part | disengaging the faulty driving part | engaging the operation of the faulty driving part and running | disengaging the faulty driving part | parking |
| | 5 | disengaging the faulty driving part | disengaging the faulty driving part | engaging the operation of the faulty driving part and running | disengaging the faulty driving part | parking |
| | 6 | disengaging the faulty driving part, and disconnecti ng the high voltage | disengaging the faulty driving part, and disconnecting the high voltage | parking, and disconnecting the high voltage | disengaging the faulty driving part, and disconnecting the high voltage | parking, and disconnecti ng the high voltage |

In the present embodiment, as in the mapping table between the disengaging-system fault levels and the electric-drive-system fault levels shown in Table 3, in the cases in which the fault level is 0-2, i.e., when the disengaging-system fault level is the first fault level, and the electric-drive-system fault level is the first fault level, which indicates that the vehicle is in the low-risk operation state or the fault-free state, and the vehicle executes an alarming operation or a reduced-power-operation action or a no-fault no-harm no-process action. In the case in which the disengaging-system fault level is 0-2, and the electric-drive-system fault level is 3, i.e., when the disengaging-system fault level is the first fault level, and the electric-drive-system fault level is the second fault level, which indicates that at this point the vehicle is in the medium-risk operation state, and the vehicle executes the operation action of decoupling the faulty electric drive system, to decouple the drive system having the fault by using a decoupling device; in other words, the faulty drive system does not affect the operation of the normal drive system, which ensures sufficiently utilizing the capacity of driving of the fault-free drive system, not reducing the driving speed, and driving normally. In the case in which the disengaging-system fault level is 0-2, and the electric-drive-system fault level is 4, i.e., when the disengaging-system fault level is the first fault level, and the electric-drive-system fault level is the third fault level, which indicates that at this point the vehicle is in the medium-risk operation state, and the vehicle executes the action of decoupling the operation of the faulty electric drive system, to decouple the drive system having the fault by using a decoupling device; in other words, the faulty drive system does not affect the operation of the normal drive system, which ensures sufficiently utilizing the capacity of driving of the fault-free drive system, not reducing the driving speed, and driving normally. In the case in which the disengaging-system fault level is 0-2, and the electric-drive-system fault level is 5, i.e., when the disengaging-system fault level is the first fault level, and the electric-drive-system fault level is the fourth fault level, which indicates that at this point the vehicle is in the medium-risk operation state, and the vehicle executes the operation action of decoupling the faulty electric drive system, to decouple the drive system having the fault by using a decoupling device; in other words, the faulty drive system does not affect the operation of the normal drive system, which ensures sufficiently utilizing the capacity of driving of the fault-free drive system, not reducing the driving speed, and driving normally. In the case in which the disengaging-system fault level is 0-2, and the electric-drive-system fault level is 6, i.e., when the disengaging-system fault level is the first fault level, and the electric-drive-system fault level is the fifth fault level, which indicates that at this point the vehicle is in the high-risk operation state, and the vehicle executes the operation action of decoupling the faulty electric drive system, to decouple the drive system having the fault by using a decoupling device, and disconnect the electric-power system of the high-voltage part of the vehicle, whereby the vehicle can be dragged without a speed limit.

In an alternative embodiment, the method further includes:
when the disengaging-system fault level is a second fault level, and the electric-drive-system fault level is the first fault level, executing the alarming action or the reduced-power-operation action;
when the disengaging-system fault level is the second fault level, and the electric-drive-system fault level is the second fault level, executing an action of engaging a faulty drive system and running;
when the disengaging-system fault level is the second fault level, and the electric-drive-system fault level is the third fault level, executing the action of engaging the operation of faulty drive system;
when the disengaging-system fault level is the second fault level, and the electric-drive-system fault level is the fourth fault level, executing the action of engaging the operation of faulty drive system; or
when the disengaging-system fault level is the second fault level, and the electric-drive-system fault level is the fifth fault level, executing an action of parking and disconnecting a high-voltage system.

In the present embodiment, as in the mapping table between the disengaging-system fault levels and the electric-drive-system fault levels shown in Table 3, in the case in which the disengaging-system fault level is 3, and the electric-drive-system fault level is 0-2, i.e., when the disengaging-system fault level is the second fault level, and the electric-drive-system fault level is the first fault level, which indicates that the vehicle is in the medium-risk operation state, and the vehicle executes an alarming operation or a reduced-power-operation action.

In the case in which the disengaging-system fault level is 3, and the electric-drive-system fault level is 3, i.e., when the disengaging-system fault level is the second fault level, and the electric-drive-system fault level is the second fault level, which indicates that at this point the vehicle is in the high-risk operation state, and the vehicle executes the operation of engaging the faulty drive system.

In the case in which the disengaging-system fault level is 3, and the electric-drive-system fault level is 4, i.e., when the disengaging-system fault level is the second fault level, and the electric-drive-system fault level is the third fault level, which indicates that at this point the vehicle is in the high-risk operation state, and the vehicle executes the operation of engaging the faulty drive system.

In the case in which the disengaging-system fault level is 3, and the electric-drive-system fault level is 5, i.e., when the disengaging-system fault level is the second fault level, and the electric-drive-system fault level is the fourth fault level, which indicates that at this point the vehicle is in the high-risk operation state, and the vehicle executes the operation of engaging the faulty drive system.

In the case in which the disengaging-system fault level is 3, and the electric-drive-system fault level is 6, i.e., when the disengaging-system fault level is the second fault level, and the electric-drive-system fault level is the fifth fault level, which indicates that at this point the vehicle is in the high-risk operation state, and the vehicle executes a parking action, and disconnects the electric-power system of the high-voltage part.

In an alternative embodiment, the method further includes:
when the disengaging-system fault level is a third fault level, and the electric-drive-system fault level is the first fault level, executing the action of disengaging the operation of the faulty drive system;
when the disengaging-system fault level is the third fault level, and the electric-drive-system fault level is the second fault level, executing the action of disengaging the operation of the faulty drive system;
when the disengaging-system fault level is the third fault level, and the electric-drive-system fault level is the third fault level, executing the action of disengaging the operation of the faulty drive system;
when the disengaging-system fault level is the third fault level, and the electric-drive-system fault level is the fourth fault level, executing the action of disengaging the operation of the faulty drive system; or
when the disengaging-system fault level is the third fault level, and the electric-drive-system fault level is the fifth fault level, executing the action of disengaging the faulty drive system, disconnecting the operation of the high-voltage system.

In the present embodiment, as in the mapping table between the disengaging-system fault levels and the electric-drive-system fault levels shown in Table 3, in the case in which the disengaging-system fault level is 4, and the electric-drive-system fault level is 0-2, i.e., when the disengaging-system fault level is the second fault level, and the electric-drive-system fault level is the first fault level, which indicates that the vehicle is in the medium-risk operation state, and the vehicle executes an alarming operation or a reduced-power-operation action. In the case in which the disengaging-system fault level is 4, and the electric-drive-system fault level is 3, i.e., when the disengaging-system fault level is the third fault level, and the electric-drive-system fault level is the second fault level, which indicates that at this point the vehicle is in the high-risk operation state, and the vehicle executes the operation of decoupling the faulty drive system and permitting being dragged with a limited rotational speed.

In the case in which the disengaging-system fault level is 4, and the electric-drive-system fault level is 4, i.e., when the disengaging-system fault level is the third fault level, and the electric-drive-system fault level is the third fault level, which indicates that at this point the vehicle is in the high-risk operation state, and the vehicle executes the operation of decoupling the faulty drive system and permitting being dragged with a limited rotational speed.

In the case in which the disengaging-system fault level is 4, and the electric-drive-system fault level is 5, i.e., when the disengaging-system fault level is the third fault level, and the electric-drive-system fault level is the fourth fault level, which indicates that at this point the vehicle is in the high-risk operation state, and the vehicle executes the operation of decoupling the faulty drive system and permitting being dragged with a limited rotational speed.

In the case in which the disengaging-system fault level is 4, and the electric-drive-system fault level is 6, i.e., when the disengaging-system fault level is the third fault level, and the electric-drive-system fault level is the fifth fault level, which indicates that at this point the vehicle is in the high-risk operation state, the vehicle executes the action of decoupling the faulty drive system and disconnecting the operation of the high-voltage system.

In an alternative embodiment, the method further includes:
when the disengaging-system fault level is a fourth fault level, and the electric-drive-system fault level is the first fault level, executing a parking action;
when the disengaging-system fault level is the fourth fault level, and the electric-drive-system fault level is the second fault level, executing a parking action;
when the disengaging-system fault level is the fourth fault level, and the electric-drive-system fault level is the third fault level, executing a parking action;
when the disengaging-system fault level is the fourth fault level, and the electric-drive-system fault level is the fourth fault level, executing a parking action; or
when the disengaging-system fault level is the fourth fault level, and the electric-drive-system fault level is the fifth fault level, executing a parking action, and disconnecting a high-voltage system.

In the present embodiment, as in the mapping table between the disengaging-system fault levels and the electric-drive-system fault levels shown in Table 3, in the case in which the disengaging-system fault level is 5, and the electric-drive-system fault level is 0-2, i.e., when the disengaging-system fault level is the fourth fault level, and the electric-drive-system fault level is the first fault level, which indicates that the vehicle is in the high-risk operation state, and the vehicle immediately executes a parking action. In the case in which the disengaging-system fault level is 5, and the electric-drive-system fault level is 3-5, i.e., when the disengaging-system fault level is the fourth fault level, and the electric-drive-system fault level is the second fault level to the fourth fault level of the fault levels, which indicates that at this point the vehicle is in the high-risk operation state, and the vehicle immediately executes a parking action. In the case in which the disengaging-system fault level is 5, and the electric-drive-system fault level is 6, i.e., when the disengaging-system fault level is the fourth fault level, and the electric-drive-system fault level is the fifth fault level, which indicates that at this point the vehicle is in the high-risk operation state, and the vehicle executes a parking action, and disconnects the electric-power system of the high-voltage part.

On the basis of the same inventive concept, an embodiment of the present application provides a system for controlling vehicle drive. Referring to FIG. 2, FIG. 2 shows a schematic diagram of a system for controlling vehicle drive. As shown in FIG. 2. the system includes:
an electric drive system, wherein the electric drive system is configured for detecting fault information of an electric drive system, and according to a grading relation of electric-drive-system fault levels, determining a fault level corresponding to the fault information.

In the present embodiment, the electric drive system comprises a front-driving drive system and a rear-driving drive system, and each of the front-driving drive system and the rear-driving drive system includes the corresponding electric motor, electric-motor controller MCU and transmission mechanism. When the component has an electric fault or a mechanical fault, it feeds back the corresponding fault information to the electric drive system EDS, and the electric drive system EDS, according to the fault information and a predetermined grading relation of the fault levels, determines the fault level of the electric fault or mechanical fault that happens in the system at this point, and feeds back the determined fault level of the electric drive system to the vehicle controller VCU.

A disengagement controlling system, wherein the disengagement controlling system is configured for, after fault information of a disengaging controller is detected, according to an acquired current gear position of the disengaging controller, determining a fault level corresponding to the fault information.

In the present embodiment, the disengagement controlling system includes the disengaging controller ACU and the decoupling structure. The decoupling structure may be provided at the front-driving drive system, and may also be provided at the rear-driving drive system, to be used to disengage the faulty drive system from the entire drive system. The disengaging controller ACU has two gears, i.e., an engaging gear and a decoupling gear. Because the decoupling structure is a mechanical structure itself, it has a low probability of fault. When the decoupling system has detected a fault of the disengaging controller ACU, it acquires the current gear position of the disengaging controller, i.e., based on the information of the current gear position of the disengaging controller, determining the disengaging-system fault level corresponding to the fault information, and feeds back the determined fault level of the decoupling system to the vehicle controller.

A vehicle controlling system, wherein the vehicle controlling system is configured for, according to the fault level of the electric-motor drive system and the fault level of the disengagement controlling system, executing a corresponding fault processing action.

In the present embodiment, the vehicle controlling system is formed by the vehicle controller VCU and a corresponding vehicle-controlling executing component. The vehicle controller VCU, after receiving the fault level of the electric drive system and the fault level of the disengaging controller ACU that are fed back, according to a mapping matrix between the fault level of the electric drive system and the fault level of the disengaging controller ACU, determines the corresponding fault processing action, and executes the corresponding fault processing action by using the corresponding executing component.

On the basis of the same inventive concept, the present application provides an apparatus for controlling vehicle drive. Referring to FIG. 3, FIG. 3 is a schematic diagram of an apparatus for controlling vehicle drive according to an embodiment of the present disclosure. As shown in FIG. 3, the apparatus includes:
a first determining module 301 configured for, after fault information of an electric drive system is detected, according to a grading relation of electric-drive-system fault levels, determining a fault level corresponding to the fault information, as an electric-drive-system fault level;
a second determining module 302 configured for, after the fault information of the disengaging controller is detected, according to an acquired current gear position of a disengaging controller, determining a fault level corresponding to the fault information, as a disengaging-system fault level; and
an executing module 303 configured for, according to the mapping matrix determined by using the electric-drive-system fault level and the disengaging-system fault level, executing the fault processing action corresponding to the first fault level and the second fault level.

On the basis of the same inventive concept, an embodiment of the present application provides a vehicle, wherein the vehicle comprises the system for controlling vehicle drive according to the third aspect of the embodiments of the present disclosure.

In the present embodiment, after the fault information of the electric drive system is detected, according to the safety-state information and the fault-behavior information of the electric drive system, the electric-drive-system fault level corresponding to the fault information is determined; after the fault information of the disengaging controller is detected, according to the acquired current gear position of the disengaging controller, the disengaging-system fault level corresponding to the fault information is determined; and according to the disengaging-system fault level and the electric-drive-system fault level, the corresponding fault processing action is executed. When any front-wheel drive system or rear-wheel drive system has a fault, the faulty drive system may be disengaged according to the determination result of the fault information, to sufficiently utilize the capacity of driving of the fault-free drive system, not reduce the driving speed, and travel normally, thereby improving the vehicle driving behavior of four-wheel-drive-system vehicles, and thus improving the driving experience.

The embodiments of the description are described in the mode of progression, each of the embodiments emphatically describes the differences from the other embodiments, and the same or similar parts of the embodiments may refer to each other.

Each component embodiment of the present disclosure may be implemented by hardware, or by software modules that are operated in one or more processors, or by a combination thereof. A person skilled in the art should understand that some or all of the functions of some or all of the components of the computing and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

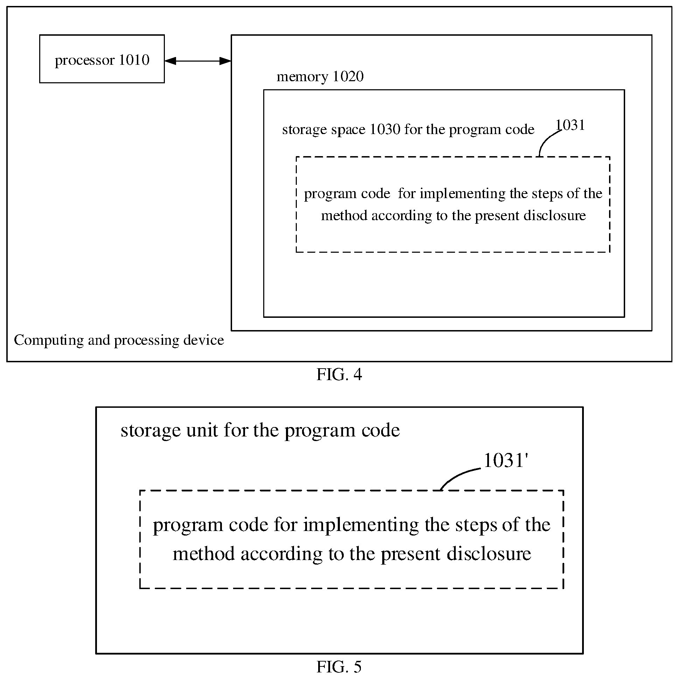

For example, FIG. 4 shows a computing and processing device that can implement the method according to the present disclosure. The computing and processing device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 5. The storage unit may have storage segments or storage spaces with similar arrangement to the memory 1020 of the computing and processing device in FIG. 4. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

A person skilled in the art should understand that the embodiments of the present disclosure may be provided as a method, a device, or a computer program product. Therefore, the embodiments of the present disclosure may take the form of a complete hardware embodiment, a complete software embodiment, or an embodiment combining software and hardware. Furthermore, the embodiments of the present disclosure may take the form of a computer program product implemented on one or more computer-usable storage media (including but not limited to a disk storage, a CD-ROM, an optical memory and so on) containing a computer-usable program code therein.

The embodiments of the present disclosure are described with reference to the flow charts and/or block diagrams of the method, the terminal device (system), and the computer program product according to the embodiments of the present disclosure. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article comprising an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

Although preferable embodiments of the embodiments of the present disclosure have been described, once a person skilled in the art has known the essential inventive concept, he may make further variations and modifications on those embodiments. Therefore, the appended claims are intended to be interpreted as including the preferable embodiments and all of the variations and modifications that fall within the scope of the embodiments of the present disclosure.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

## Claims

1. A method for controlling a vehicle electric drive system having a front-wheel drive system and a rear-wheel drive system, wherein the method comprises:
(S101) after fault information of the electric drive system is detected, according to safety-state information, fault-behavior information and a post-process execution action of the electric drive system, determining an electric-drive-system fault level corresponding to the fault information;
(S102) after fault information of a disengaging system is detected, according to an acquired current gear position of a disengaging controller, determining a disengaging-system fault level corresponding to the fault information; and
(S103) according to the disengaging-system fault level and the electric-drive-system fault level, executing a corresponding fault processing action comprising, when the front-wheel drive system or the rear-wheel drive system has a fault, disengaging the faulty drive system.

2. The method according to claim 1, wherein the step of, according to the safety-state information, the fault-behavior information and the post-process execution action of the electric drive system, determining the electric-drive-system fault level corresponding to the fault information comprises:
when the safety state of the electric drive system is that merely an active short-circuit state is capable to be executed, a fault behavior is that a power of the electric drive system is lost, and the post-process execution action is that disconnecting a high voltage is required, determining the electric-drive-system fault level to be a fifth fault level;
when the safety state of the electric drive system is that merely the active short-circuit state is capable to be executed, the fault behavior is that the power of the electric drive system is lost, and the post-process execution action is that reducing a rotational speed of an electric motor to zero within a preset duration is required, determining the electric-drive-system fault level to be a fourth fault level;
when the safety state of the electric drive system is the active short-circuit state or a free-operation state, the fault behavior is that the power of the electric drive system is lost, and the post-process execution action is that reducing the rotational speed of the electric motor to a preset rotational speed within the preset duration is required, determining the electric-drive-system fault level to be a third fault level;
when the safety state of the electric drive system is the active short-circuit state or the free-operation state, the fault behavior is that the electric drive system stands by, and the post-process execution action is that reducing the rotational speed of the electric motor to the preset rotational speed within the preset duration is required, determining the electric-drive-system fault level to be a second fault level; or
when the safety state of the electric drive system does not influence a driving safety state, determining the electric-drive-system fault level to be a first fault level.

3. The method according to claim 1 or 2, wherein the step of, according to the acquired current gear position of the disengaging controller, determining the disengaging-system fault level corresponding to the fault information comprises:
when the current gear position of the disengaging controller is in a half-engaging position or is unknown, determining a current disengaging-system fault level to be a fourth fault level;
when the current gear position of the disengaging controller is in a disengaging position, determining the current disengaging-system fault level to be a third fault level;
when the current gear position of the disengaging controller is in an engaging position, determining the current disengaging-system fault level to be a second fault level; or
when the fault information of the disengaging controller does not influence a driving safety state, determining the current disengaging-system fault level to be a first fault level.

4. The method according to claim 3, wherein the method further comprises:
when the disengaging-system fault level is the fourth fault level, reporting a fault code, and parking within a prescribed duration;
when the disengaging-system fault level is the third fault level, reporting the fault code, entering a safety state and disengaging;
when the disengaging-system fault level is the second fault level, reporting the fault code, entering the safety state and engaging; or
when the disengaging-system fault level is the first fault level, not processing or alarming.

5. The method according to claim 2 and 3, wherein the step of, according to the disengaging-system fault level and the electric-drive-system fault level, executing the corresponding fault processing action comprises:
when the disengaging-system fault level is a first fault level, and the electric-drive-system fault level is a first fault level, executing a no-fault no-process action, an alarming action or a reduced-power-operation action;
when the disengaging-system fault level is the first fault level, and the electric-drive-system fault level is a second fault level, executing an action of disengaging operation of a faulty drive system;
when the disengaging-system fault level is the first fault level, and the electric-drive-system fault level is a third fault level, executing the action of disengaging the operation of the faulty drive system;
when the disengaging-system fault level is the first fault level, and the electric-drive-system fault level is a fourth fault level, executing the action of disengaging the operation of the faulty drive system; or
when the disengaging-system fault level is the first fault level, and the electric-drive-system fault level is a fifth fault level, executing an action of disengaging the faulty drive system, disconnecting operation of a high-voltage system.

6. The method according to claim 2 and 3, or 5, wherein the method further comprises:
when the disengaging-system fault level is a second fault level, and the electric-drive-system fault level is the first fault level, executing the alarming action or the reduced-power-operation action;
when the disengaging-system fault level is the second fault level, and the electric-drive-system fault level is the second fault level, executing an action of engaging the operation of faulty drive system;
when the disengaging-system fault level is the second fault level, and the electric-drive-system fault level is the third fault level, executing the action of engaging the operation of faulty drive system;
when the disengaging-system fault level is the second fault level, and the electric-drive-system fault level is the fourth fault level, executing the action of engaging the operation of faulty drive system; or
when the disengaging-system fault level is the second fault level, and the electric-drive-system fault level is the fifth fault level, executing an action of parking and disconnecting the high-voltage system.

7. The method according to claim 2 and 3, or 5, wherein the method further comprises:
when the disengaging-system fault level is a third fault level, and the electric-drive-system fault level is the first fault level, executing the action of disengaging the operation of the faulty drive system;
when the disengaging-system fault level is the third fault level, and the electric-drive-system fault level is the second fault level, executing the action of disengaging the operation of the faulty drive system;
when the disengaging-system fault level is the third fault level, and the electric-drive-system fault level is the third fault level, executing the action of disengaging the operation of the faulty drive system;
when the disengaging-system fault level is the third fault level, and the electric-drive-system fault level is the fourth fault level, executing the action of disengaging the operation of the faulty drive system; or
when the disengaging-system fault level is the third fault level, and the electric-drive-system fault level is the fifth fault level, executing the action of disengaging the faulty drive system, disconnecting the operation of the high-voltage system.

8. The method according to claim 2 and 3, or 5, wherein the method further comprises:
when the disengaging-system fault level is a fourth fault level, and the electric-drive-system fault level is the first fault level, executing a parking action;
when the disengaging-system fault level is the fourth fault level, and the electric-drive-system fault level is the second fault level, executing the parking action;
when the disengaging-system fault level is the fourth fault level, and the electric-drive-system fault level is the third fault level, executing the parking action;
when the disengaging-system fault level is the fourth fault level, and the electric-drive-system fault level is the fourth fault level, executing the parking action; or
when the disengaging-system fault level is the fourth fault level, and the electric-drive-system fault level is the fifth fault level, executing the parking action, and disconnecting the high-voltage system.

9. An apparatus for controlling a vehicle electric drive system having a front-wheel drive system and a rear-wheel drive system, wherein the apparatus comprises:
a first determining module (301) configured for, after fault information of the electric drive system is detected, according to a grading relation of electric-drive-system fault levels, determining a fault level of the electric drive system corresponding to the fault information, as an electric-drive-system fault level;
a second determining module (302) configured for, after fault information of a disengaging system is detected, according to an acquired current gear position of a disengaging controller, determining a fault level corresponding to the fault information, as a disengaging-system fault level; and
an executing module (303) configured for, according to the disengaging-system fault level and the electric-drive-system fault level, executing a corresponding fault processing action comprising, when the front-wheel drive system or the rear-wheel drive system has a fault, disengaging the faulty drive system.

10. A system for controlling vehicle drive, wherein the system comprises the apparatus according to claim 9 is applied to a vehicle having a steer-by-wire system.

11. A readable storage medium, wherein the storage medium stores a program for controlling a vehicle electric drive system having a front-wheel drive system and a rear-wheel drive system, and the program for controlling the vehicle electric drive system, when executed by a processor, causes the steps of the method according to any one of claims 1-8 to be implemented.

12. A vehicle, wherein the vehicle comprises the system for controlling vehicle drive according to claim 10.

13. A computing and processing device, wherein the computing and processing device comprises:
a memory (1020) storing a computer-readable code (1031) therein; and
one or more processors (1010), wherein when the computer-readable code is executed by the one or more processors (1010), the computing and processing device implements the method for controlling vehicle drive according to any one of claims 1-8.

14. A computer program, wherein the computer program comprises a computer-readable code, and when the computer-readable code is executed in a computing and processing device, the computer-readable code causes the computing and processing device to implement the method according to any one of claims 1-8.

15. A computer-readable storage medium, wherein the computer-readable medium stores the computer program according to claim 14 therein.

## Patentansprüche

1. Verfahren zum Steuern eines Fahrzeugelektroantriebssystems mit einem Vorderradantriebssystem und einem Hinterradantriebssystem, wobei das Verfahren aufweist:
(S101) nachdem eine Fehlerinformation des Elektroantriebssystems detektiert wurde, Bestimmen gemäß Sicherheitszustandsinformation, Fehlerverhaltensinformation und einer Nachprozess-Ausführungsaktion des Elektroantriebssystems einer der Fehlerinformation entsprechenden Elektroantriebssystemfehlerstufe;
(S102) nachdem eine Fehlerinformation eines Ausrücksystems detektiert wurde, Bestimmen gemäß einer erfassten aktuellen Gangposition einer Ausrücksteuerung einer der Fehlerinformation entsprechenden Ausrücksystemfehlerstufe; und
(S103) Ausführen gemäß der Ausrücksystemfehlerstufe und der Elektroantriebssystemfehlerstufe einer entsprechenden Fehlerverarbeitungsaktion, die aufweist, wenn das Vorderradantriebssystem oder das Hinterradantriebssystem einen Fehler aufweist, das fehlerhafte Antriebssystem auszurücken.

2. Verfahren nach Anspruch 1, wobei der Schritt des Bestimmens gemäß der Sicherheitszustandsinformation, der Fehlerverhaltensinformation und der Nachprozess-Ausführungsaktion des Elektroantriebssystems, der der Fehlerinformation entsprechenden Elektroantriebssystemfehlerstufe aufweist:
wenn der Sicherheitszustand des Elektroantriebssystems derart ist, dass lediglich ein Aktivkurzschlusszustand ausführbar ist, ein Fehlerverhalten derart ist, dass eine Leistung des Elektroantriebssystems ausfällt, und die Nachprozess-Ausführungsaktion derart ist, dass das Trennen einer Hochspannung erforderlich ist, Bestimmen der Elektroantriebssystemfehlerstufe als fünfte Fehlerstufe;
wenn der Sicherheitszustand des Elektroantriebssystems derart ist, dass lediglich der Aktivkurzschlusszustand ausführbar ist, das Fehlerverhalten derart ist, dass die Leistung des Elektroantriebssystems ausfällt, und die Nachprozess-Ausführungsaktion derart ist, dass das Reduzieren einer Drehzahl eines Elektromotors auf null innerhalb einer vorbestimmten Dauer erforderlich ist, Bestimmen der Elektroantriebssystemfehlerstufe als vierte Fehlerstufe;
wenn der Sicherheitszustand des Elektroantriebssystems der Aktivkurzschlusszustand oder ein Freilaufzustand ist, das Fehlerverhalten derart ist, dass die Leistung des Elektroantriebssystems ausfällt, und die Nachprozess-Ausführungsaktion derart ist, dass das Reduzieren der Drehzahl des Elektromotors auf eine vorbestimmte Drehzahl innerhalb der vorbestimmten Dauer erforderlich ist, Bestimmen der Elektroantriebssystemfehlerstufe als dritte Fehlerstufe;
wenn der Sicherheitszustand des Elektroantriebssystems der Aktivkurzschlusszustand oder der Freilaufzustand ist, das Fehlerverhalten derart ist, dass sich das Elektroantriebssystem im Bereitschaftszustand befindet, und die Nachprozess-Ausführungsaktion derart ist, dass das Reduzieren der Drehzahl des Elektromotors auf die vorbestimmte Drehzahl innerhalb der vorbestimmten Dauer erforderlich ist, Bestimmen der Elektroantriebssystemfehlerstufe als zweite Fehlerstufe; oder
wenn der Sicherheitszustand des Elektroantriebssystems einen Fahr- oder Fahrsicherheitszustand nicht beeinflusst, Bestimmen der Elektroantriebssystemfehlerstufe als erste Fehlerstufe.

3. Verfahren nach Anspruch 1 oder 2, wobei der Schritt des Bestimmens gemäß der erfassten aktuellen Gangposition der Ausrücksteuerung der der Fehlerinformation entsprechenden Ausrücksystemfehlerstufe aufweist:
wenn die aktuelle Gangposition der Ausrücksteuerung in einer Halbeingerückt-Position ist oder unbekannt ist, Bestimmen der aktuellen Ausrücksystemfehlerstufe als vierte Fehlerstufe;
wenn die aktuelle Gangposition der Ausrücksteuerung in einer Ausgerückt-Position ist, Bestimmen der aktuellen Ausrücksystemfehlerstufe als dritte Fehlerstufe;
wenn die aktuelle Gangposition der Ausrücksteuerung in einer Eingerückt-Position ist, Bestimmen der aktuelle Ausrücksystemfehlerstufe als zweite Fehlerstufe; oder
wenn die Fehlerinformation der Ausrücksteuerung einen Fahr- oder Fahrsicherheitszustand nicht beeinflusst, Bestimmen der aktuellen Ausrücksystemfehlerstufe als erste Fehlerstufe.

4. Verfahren nach Anspruch 3, wobei das Verfahren ferner aufweist:
wenn die Ausrücksystemfehlerstufe die vierte Fehlerstufe ist, Melden eines Fehlercodes und Parken innerhalb einer vorgeschriebenen Zeitdauer;
wenn die Ausrücksystemfehlerstufe die dritte Fehlerstufe ist, Melden des Fehlercodes, Eintreten in einen Sicherheitszustand und Ausrücken;
wenn die Ausrücksystemfehlerstufe die zweite Fehlerstufe ist, Melden des Fehlercodes, Eintreten in den Sicherheitszustand und Einrücken; oder
wenn die Ausrücksystemfehlerstufe die erste Fehlerstufe ist, Durchführen keiner Verarbeitung oder Alarmierung.

5. Verfahren nach Anspruch 2 und 3, wobei der Schritt des Ausführens gemäß der Ausrücksystemfehlerstufe und der Elektroantriebssystemfehlerstufe der entsprechenden Fehlerverarbeitungsaktion aufweist:
wenn die Ausrücksystemfehlerstufe eine erste Fehlerstufe ist und die Elektroantriebssystemfehlerstufe eine erste Fehlerstufe ist, Ausführen einer Keine-Fehler-Keine-Verarbeitung-Aktion, einer Alarmierungsaktion oder einer Reduzierte-Leistung-Betriebsaktion;
wenn die Ausrücksystemfehlerstufe die erste Fehlerstufe ist und die Elektroantriebssystemfehlerstufe die zweite Fehlerstufe ist, Ausführen einer Aktion eines Ausrückbetriebs eines fehlerhaften Antriebssystems;
wenn die Ausrücksystemfehlerstufe die erste Fehlerstufe ist und die Elektroantriebssystemfehlerstufe die dritte Fehlerstufe ist, Ausführen der Aktion des Ausrückbetriebs des fehlerhaften Antriebssystems;
wenn die Ausrücksystemfehlerstufe die erste Fehlerstufe ist und die Elektroantriebssystemfehlerstufe die vierte Fehlerstufe ist, Ausführen der Aktion des Ausrückbetriebs des fehlerhaften Antriebssystems; oder
wenn die Ausrücksystemfehlerstufe die erste Fehlerstufe ist und die Elektroantriebssystemfehlerstufe die fünfte Fehlerstufe ist, Ausführen einer Aktion des Ausrückens des fehlerhaften Antriebssystems sowie eines Abtrennvorgangs eines Hochspannungssystems.

6. Verfahren nach Anspruch 2 und 3 oder 5, wobei das Verfahren ferner aufweist:
wenn die Ausrücksystemfehlerstufe eine zweite Fehlerstufe ist und die Elektroantriebssystemfehlerstufe die erste Fehlerstufe ist, Ausführen der Alarmierungsaktion oder der Reduzierte-Leistung-Betriebsaktion;
wenn die Ausrücksystemfehlerstufe die zweite Fehlerstufe ist und die Elektroantriebssystemfehlerstufe die zweite Fehlerstufe ist, Ausführen einer Aktion des Einrückbetriebs eines fehlerhaften Antriebssystems;
wenn die Ausrücksystemfehlerstufe die zweite Fehlerstufe ist und die Elektroantriebssystemfehlerstufe die dritte Fehlerstufe ist, Ausführen der Aktion des Einrückbetriebs eines fehlerhaften Antriebssystems auszuführen;
wenn die Ausrücksystemfehlerstufe die zweite Fehlerstufe ist und die Elektroantriebssystemfehlerstufe die vierte Fehlerstufe ist, Ausführen der Aktion des Einrückbetriebs eines fehlerhaften Antriebssystems; oder
wenn die Ausrücksystemfehlerstufe die zweite Fehlerstufe ist und die Elektroantriebssystemfehlerstufe die fünfte Fehlerstufe ist, Ausführen einer Aktion des Parkens und des Trennens des Hochspannungssystems.

7. Verfahren nach Anspruch 2 und 3 oder 5, wobei das Verfahren ferner aufweist:
wenn die Ausrücksystemfehlerstufe eine dritte Fehlerstufe ist und die Elektroantriebssystemfehlerstufe die erste Fehlerstufe ist, Ausführen der Aktion des Ausrückbetriebs des fehlerhaften Antriebssystems;
wenn die Ausrücksystemfehlerstufe die dritte Fehlerstufe ist und die Elektroantriebssystemfehlerstufe die zweite Fehlerstufe ist, Ausführen der Aktion des Ausrückbetriebs des fehlerhaften Antriebssystems;
wenn die Ausrücksystemfehlerstufe die dritte Fehlerstufe ist und die Elektroantriebssystemfehlerstufe die dritte Fehlerstufe ist, Ausführen der Aktion des Ausrückbetriebs des fehlerhaften Antriebssystems;
wenn die Ausrücksystemfehlerstufe die dritte Fehlerstufe ist und die Elektroantriebssystemfehlerstufe die vierte Fehlerstufe ist, Ausführen der Aktion des Ausrückbetriebs des fehlerhaften Antriebssystems; oder
wenn die Ausrücksystemfehlerstufe die dritte Fehlerstufe ist und die Elektroantriebssystemfehlerstufe die fünfte Fehlerstufe ist, Ausführen der Aktion des Ausrückens des fehlerhaften Antriebssystems sowie das Trennen des Hochspannungssystems.

8. Verfahren nach Anspruch 2 und 3 oder 5, wobei das Verfahren ferner aufweist:
wenn die Ausrücksystemfehlerstufe eine vierte Fehlerstufe ist und die
Elektroantriebssystemfehlerstufe die erste Fehlerstufe ist, Ausführen einer Parkaktion;
wenn die Ausrücksystemfehlerstufe die vierte Fehlerstufe ist und die Elektroantriebssystemfehlerstufe die zweite Fehlerstufe ist, Ausführen der Parkaktion;
wenn die Ausrücksystemfehlerstufe die vierte Fehlerstufe ist und die Elektroantriebssystemfehlerstufe die dritte Fehlerstufe ist, Ausführen der Parkaktion;
wenn die Ausrücksystemfehlerstufe die vierte Fehlerstufe ist und die Elektroantriebssystemfehlerstufe die vierte Fehlerstufe ist, Ausführen der Parkaktion; oder
wenn die Ausrücksystemfehlerstufe die vierte Fehlerstufe ist und die Elektroantriebssystemfehlerstufe die fünfte Fehlerstufe ist, Ausführen der Parkaktion sowie des Trennens des Hochspannungssystems.

9. Vorrichtung zum Steuern eines Fahrzeugelektroantriebssystems mit einem Vorderradantriebssystem und einem Hinterradantriebssystem, wobei die Vorrichtung aufweist:
ein erstes Bestimmungsmodul (301), das ausgebildet ist, nachdem eine Fehlerinformation des Elektroantriebssystems detektiert wurde, gemäß einer Einstufungsrelation von Elektroantriebssystemfehlerstufen eine der Fehlerinformation entsprechende Fehlerstufe des Elektroantriebssystems als Elektroantriebssystemfehlerstufe zu bestimmen;
ein zweites Bestimmungsmodul (302), das ausgebildet ist, nachdem eine Fehlerinformation eines Ausrücksystems detektiert wurde, gemäß einer erfassten aktuellen Gangposition einer Ausrücksteuerung eine der Fehlerinformation entsprechende Fehlerstufe als Ausrücksystemfehlerstufe zu bestimmen; und
ein Ausführungsmodul (303), das ausgebildet ist, gemäß der Ausrücksystemfehlerstufe und der Elektroantriebssystemfehlerstufe eine entsprechende Fehlerverarbeitungsaktion auszuführen, die aufweist, wenn das Vorderradantriebssystem oder das Hinterradantriebssystem einen Fehler aufweist, das fehlerhafte Antriebssystem auszukuppeln.

10. System zum Steuern eines Fahrzeugantriebs, wobei das System aufweist, dass die Vorrichtung nach Anspruch 9 an einem Fahrzeug mit einem Steer-by-Wire-System angewendet wird.

11. Lesbares Speichermedium, wobei das Speichermedium ein Programm zum Steuern eines Fahrzeugelektroantriebssystems mit einem Vorderradantriebssystem und einem Hinterradantriebssystem speichert, und das Programm zum Steuern des Fahrzeugelektroantriebssystems, wenn es von einem Prozessor ausgeführt wird, bewirkt, dass die Schritte des Verfahrens nach einem der Ansprüche 1-8 implementiert werden.

12. Fahrzeug, wobei das Fahrzeug das System zum Steuern eines Fahrzeugantriebs nach Anspruch 10 aufweist.

13. Rechen- und Verarbeitungsvorrichtung, wobei die Rechen- und Verarbeitungsvorrichtung aufweist:
einen Speicher (1020), der darin einen computerlesbaren Code (1031) speichert; und
einen oder mehrere Prozessoren (1010), wobei, wenn der computerlesbare Code von dem einen oder den mehreren Prozessoren (1010) ausgeführt wird, die Rechen- und Verarbeitungsvorrichtung das Verfahren zum Steuern eines Fahrzeugantriebs nach einem der Ansprüche 1-8 implementiert.

14. Computerprogramm, wobei das Computerprogramm einen computerlesbaren Code aufweist, und wenn der computerlesbare Code in einer Rechen- und Verarbeitungsvorrichtung ausgeführt wird, bewirkt der computerlesbare Code, dass die Rechen- und Verarbeitungsvorrichtung das Verfahren nach einem der Ansprüche 1-8 implementiert.

15. Computerlesbares Speichermedium, wobei das computerlesbare Speichermedium darin das Computerprogramm nach Anspruch 14 speichert.

## Revendications

1. Procédé pour commander un système d'entraînement électrique de véhicule qui comporte un système d'entraînement de roues avant et un système d'entraînement de roues arrière, dans lequel le procédé comprend :
(S101) après qu'une information de panne du système d'entraînement électrique a été détectée, conformément à une information d'état de sécurité, à une information de comportement sous panne et à une action d'exécution de post-traitement du système d'entraînement électrique, la détermination d'un niveau de panne du système d'entraînement électrique qui correspond à l'information de panne ;
(S102) après qu'une information de panne d'un système de désengagement a été détectée, conformément à une position d'engrenage courante acquise d'un contrôleur de désengagement, la détermination d'un niveau de panne du système de désengagement qui correspond à l'information de panne ; et
(S103) conformément au niveau de panne du système de désengagement et au niveau de panne du système d'entraînement électrique, l'exécution d'une action de traitement de panne correspondante comprenant, lorsque le système d'entraînement de roues avant ou le système d'entraînement de roues arrière présente une panne, le désengagement du système d'entraînement en panne.

2. Procédé selon la revendication 1, dans lequel l'étape de, conformément à l'information d'état de sécurité, à l'information de comportement sous panne et à l'action d'exécution de post-traitement du système d'entraînement électrique, détermination du niveau de panne du système d'entraînement électrique qui correspond à l'information de panne comprend :
lorsque l'état de sécurité du système d'entraînement électrique consiste en ce que simplement un état de court-circuit actif peut être exécuté, un comportement sous panne consiste en ce qu'une puissance du système d'entraînement électrique est perdue et l'action d'exécution de post-traitement consiste en ce qu'une déconnexion d'une tension élevée est requise, la détermination du fait que le niveau de panne du système d'entraînement électrique est un cinquième niveau de panne ;
lorsque l'état de sécurité du système d'entraînement électrique consiste en ce que simplement l'état de court-circuit actif peut être exécuté, le comportement sous panne consiste en ce que la puissance du système d'entraînement électrique est perdue et l'action d'exécution de post-traitement consiste en ce que la réduction d'une vitesse de rotation d'un moteur électrique à zéro à l'intérieur d'une durée prédéfinie est requise, la détermination du fait que le niveau de panne du système d'entraînement électrique est un quatrième niveau de panne ;
lorsque l'état de sécurité du système d'entraînement électrique est l'état de court-circuit actif ou un état de fonctionnement en roue libre, le comportement sous panne consiste en ce que la puissance du système d'entraînement électrique est perdue et l'action d'exécution de post-traitement consiste en ce que la réduction de la vitesse de rotation du moteur électrique à une vitesse de rotation prédéfinie à l'intérieur de la durée prédéfinie est requise, la détermination du fait que le niveau de panne du système d'entraînement électrique est un troisième niveau de panne ;
lorsque l'état de sécurité du système d'entraînement électrique est l'état de court-circuit actif ou l'état de fonctionnement en roue libre, le comportement sous panne consiste en ce que le système d'entraînement électrique est en attente et l'action d'exécution de post-traitement consiste en ce que la réduction de la vitesse de rotation du moteur électrique à la vitesse de rotation prédéfinie à l'intérieur de la durée prédéfinie est requise, la détermination du fait que le niveau de panne du système d'entraînement électrique est un deuxième niveau de panne ; ou
lorsque l'état de sécurité du système d'entraînement électrique n'influence pas un état de sécurité de la conduite, la détermination du fait que le niveau de panne du système d'entraînement électrique est un premier niveau de panne.

3. Procédé selon la revendication 1 ou 2, dans lequel l'étape de, conformément à la position d'engrenage courante acquise du contrôleur de désengagement, détermination du niveau de panne du système de désengagement qui correspond à l'information de panne comprend :
lorsque la position d'engrenage courante du contrôleur de désengagement est une position de demi-engagement ou est inconnue, la détermination du fait qu'un niveau de panne courant du système de désengagement est un quatrième niveau de panne ;
lorsque la position d'engrenage courante du contrôleur de désengagement est une position de désengagement, la détermination du fait que le niveau de panne courant du système de désengagement est un troisième niveau de panne ;
lorsque la position d'engrenage courante du contrôleur de désengagement est une position d'engagement, la détermination du fait que le niveau de panne courant du système de désengagement est un deuxième niveau de panne ; ou
lorsque l'information de panne du contrôleur de désengagement n'influence pas un état de sécurité de la conduite, la détermination du fait que le niveau de panne courant du système de désengagement est un premier niveau de panne.

4. Procédé selon la revendication 3, dans lequel le procédé comprend en outre :
lorsque le niveau de panne du système de désengagement est le quatrième niveau de panne, le rapport d'un code de panne et l'immobilisation du véhicule à l'intérieur d'une durée prescrite ;
lorsque le niveau de panne du système de désengagement est le troisième niveau de panne, le rapport du code de panne, l'entrée dans un état de sécurité et le désengagement ;
lorsque le niveau de panne du système de désengagement est le deuxième niveau de panne, le rapport du code de panne, l'entrée dans l'état de sécurité et l'engagement ; ou
lorsque le niveau de panne du système de désengagement est le premier niveau de panne, le fait de n'effectuer ni traitement, ni émission d'alarme.

5. Procédé selon les revendications 2 et 3, dans lequel l'étape de, conformément au niveau de panne du système de désengagement et au niveau de panne du système d'entraînement électrique, exécution de l'action de traitement de panne correspondante comprend :
lorsque le niveau de panne du système de désengagement est un premier niveau de panne et que le niveau de panne du système d'entraînement électrique est un premier niveau de panne, l'exécution d'une action du type pas de panne et pas de traitement, d'une action d'émission d'alarme ou d'une action de fonctionnement à puissance réduite ;
lorsque le niveau de panne du système de désengagement est le premier niveau de panne et que le niveau de panne du système d'entraînement électrique est un deuxième niveau de panne, l'exécution d'une action d'opération de désengagement d'un système d'entraînement en panne ;
lorsque le niveau de panne du système de désengagement est le premier niveau de panne et que le niveau de panne du système d'entraînement électrique est un troisième niveau de panne, l'exécution de l'action de désengagement du fonctionnement du système d'entraînement en panne ;
lorsque le niveau de panne du système de désengagement est le premier niveau de panne et que le niveau de panne du système d'entraînement électrique est un quatrième niveau de panne, l'exécution de l'action de désengagement du fonctionnement du système d'entraînement en panne ; ou
lorsque le niveau de panne du système de désengagement est le premier niveau de panne et que le niveau de panne du système d'entraînement électrique est un cinquième niveau de panne, l'exécution d'une action de désengagement du système d'entraînement en panne et la déconnexion du fonctionnement d'un système haute tension.

6. Procédé selon les revendications 2 et 3 ou 5, dans lequel le procédé comprend en outre :
lorsque le niveau de panne du système de désengagement est un deuxième niveau de panne et que le niveau de panne du système d'entraînement électrique est le premier niveau de panne, l'exécution de l'action d'émission d'alarme ou de l'action de fonctionnement à puissance réduite ;
lorsque le niveau de panne du système de désengagement est le deuxième niveau de panne et que le niveau de panne du système d'entraînement électrique est le deuxième niveau de panne, l'exécution d'une action d'engagement du fonctionnement du système d'entraînement en panne ;
lorsque le niveau de panne du système de désengagement est le deuxième niveau de panne et que le niveau de panne du système d'entraînement électrique est le troisième niveau de panne, l'exécution de l'action d'engagement du fonctionnement du système d'entraînement en panne ;
lorsque le niveau de panne du système de désengagement est le deuxième niveau de panne et que le niveau de panne du système d'entraînement électrique est le quatrième niveau de panne, l'exécution de l'action d'engagement du fonctionnement du système d'entraînement en panne ; ou
lorsque le niveau de panne du système de désengagement est le deuxième niveau de panne et que le niveau de panne du système d'entraînement électrique est le cinquième niveau de panne, l'exécution d'une action d'immobilisation du véhicule et la déconnexion du système haute tension.

7. Procédé selon les revendications 2 et 3 ou 5, dans lequel le procédé comprend en outre :
lorsque le niveau de panne du système de désengagement est un troisième niveau de panne et que le niveau de panne du système d'entraînement électrique est le premier niveau de panne, l'exécution de l'action de désengagement du fonctionnement du système d'entraînement en panne ;
lorsque le niveau de panne du système de désengagement est le troisième niveau de panne et que le niveau de panne du système d'entraînement électrique est le deuxième niveau de panne, l'exécution de l'action de désengagement du fonctionnement du système d'entraînement en panne ;
lorsque le niveau de panne du système de désengagement est le troisième niveau de panne et que le niveau de panne du système d'entraînement électrique est le troisième niveau de panne, l'exécution de l'action de désengagement du fonctionnement du système d'entraînement en panne ;
lorsque le niveau de panne du système de désengagement est le troisième niveau de panne et que le niveau de panne du système d'entraînement électrique est le quatrième niveau de panne, l'exécution de l'action de désengagement du fonctionnement du système d'entraînement en panne ; ou
lorsque le niveau de panne du système de désengagement est le troisième niveau de panne et que le niveau de panne du système d'entraînement électrique est le cinquième niveau de panne, l'exécution de l'action de désengagement du système d'entraînement en panne et la déconnexion du fonctionnement du système haute tension.

8. Procédé selon les revendications 2 et 3 ou 5, dans lequel le procédé comprend en outre :
lorsque le niveau de panne du système de désengagement est un quatrième niveau de panne et que le niveau de panne du système d'entraînement électrique est le premier niveau de panne, l'exécution d'une action d'immobilisation du véhicule ;
lorsque le niveau de panne du système de désengagement est le quatrième niveau de panne et que le niveau de panne du système d'entraînement électrique est le deuxième niveau de panne, l'exécution de l'action d'immobilisation du véhicule ;
lorsque le niveau de panne du système de désengagement est le quatrième niveau de panne et que le niveau de panne du système d'entraînement électrique est le troisième niveau de panne, l'exécution de l'action d'immobilisation du véhicule ;
lorsque le niveau de panne du système de désengagement est le quatrième niveau de panne et que le niveau de panne du système d'entraînement électrique est le quatrième niveau de panne, l'exécution de l'action d'immobilisation du véhicule ; ou
lorsque le niveau de panne du système de désengagement est le quatrième niveau de panne et que le niveau de panne du système d'entraînement électrique est le cinquième niveau de panne, l'exécution de l'action d'immobilisation du véhicule et la déconnexion du système haute tension.

9. Appareil pour commander un système d'entraînement électrique de véhicule qui comporte un système d'entraînement de roues avant et un système d'entraînement de roues arrière, dans lequel l'appareil comprend :
un premier module de détermination (301) configuré pour, après qu'une information de panne du système d'entraînement électrique a été détectée, conformément à une relation de classement de niveaux de panne du système d'entraînement électrique, déterminer un niveau de panne du système d'entraînement électrique qui correspond à l'information de panne, en tant que niveau de panne du système d'entraînement électrique ;
un second module de détermination (302) configuré pour, après qu'une information de panne d'un système de désengagement a été détectée, conformément à une position d'engrenage courante acquise d'un contrôleur de désengagement, déterminer un niveau de panne qui correspond à l'information de panne, en tant que niveau de panne du système de désengagement ; et
un module d'exécution (303) configuré pour, conformément au niveau de panne du système de désengagement et au niveau de panne du système d'entraînement électrique, exécuter une action de traitement de panne correspondante comprenant, lorsque le système d'entraînement de roues avant ou le système d'entraînement de roues arrière présente une panne, le désengagement du système d'entraînement en panne.

10. Système pour commander un entraînement de véhicule, dans lequel le système comprend le fait que l'appareil selon la revendication 9 est appliqué à un véhicule qui comporte un système de direction par câbles.

11. Support de stockage lisible, dans lequel le support de stockage stocke un programme pour commander un système d'entraînement électrique de véhicule qui comporte un système d'entraînement de roues avant et un système d'entraînement de roues arrière, et le programme pour commander le système d'entraînement électrique de véhicule, lorsqu'il est exécuté par un processeur, a pour effet que les étapes du procédé selon l'une quelconque des revendications 1 à 8 sont mises en œuvre.

12. Véhicule, dans lequel le véhicule comprend le système pour commander un entraînement de véhicule selon la revendication 10.

13. Dispositif de calcul et de traitement, dans lequel le dispositif de calcul et de traitement comprend :
une mémoire (1020) qui stocke un code lisible par ordinateur (1031) en son sein ; et
un ou plusieurs processeurs (1010), dans lequel, lorsque le code lisible par ordinateur est exécuté par les un ou plusieurs processeurs (1010), le dispositif de calcul et de traitement met en œuvre le procédé pour commander un entraînement de véhicule selon l'une quelconque des revendications 1 à 8.

14. Programme informatique, dans lequel le programme informatique comprend un code lisible par ordinateur, et lorsque le code lisible par ordinateur est exécuté dans un dispositif de calcul et de traitement, le code lisible par ordinateur a pour effet que le dispositif de calcul et de traitement met en œuvre le procédé selon l'une quelconque des revendications 1 à 8.

15. Support de stockage lisible par ordinateur, dans lequel le support lisible par ordinateur stocke le programme informatique selon la revendication 14 en son sein.
